# EUROPEAN PATENT APPLICATION

(11) **EP 4 769 269 A1**
(43) Date of publication of application: **01.07.2026**
(21) Application number: 25222843.2
(22) Date of filing: 12.12.2025
(51) Int. Cl.: G06Q 20/06, G06Q 20/10, G07F 19/00

(54) **COLD-WALLET INTERFACE FOR AN AUTOMATED TELLER MACHINE**

(30) Priority: 31.12.2024 US 202419006488
(71) Applicant: Cardtronics USA, Inc., Atlanta, GA 30308-1007 (US)
(72) Inventor: WALLACE, Kieran David, Carnoustie, DD7 6GP (GB)
(74) Representative: Secerna LLP

(57) **Abstract**

An automated teller machine (ATM) with a cold-wallet interface and a machine readable media are disclosed. The ATM comprises: a user interface, a memory including instructions; and processing circuitry that, when in operation, is configured by the instructions to: receive, via the user interface, an instruction from a user for a cryptocurrency transaction, the cryptocurrency transaction including a transfer involving a cold wallet of the user; obtain a key from the cold wallet via a hardware interface of the ATM; perform the cryptocurrency transaction using the key; and erase the key from the ATM based on completion of a session between the user and the ATM.

## Description

### TECHNICAL FIELD

Embodiments described herein generally relate to automated teller machines and more specifically to cold-wallet interface for an automated teller machine.

### BACKGROUND

An Automated Teller Machine (ATM) is an electronic device configured to provide service to users without the need for direct interaction with a person. In the context of banking services, an ATM is typically configured to dispense media (e.g., bank notes or specie), receive media (e.g., bank notes, specie, checks, etc.), or perform other transactions (e.g., transferring money between accounts, pay bills, etc.). An ATM includes both hardware and software components, enabling secure and efficient financial transactions. Usually. the hardware includes a card reader for identifying user accounts through magnetic stripe or chip-based debit or credit cards, a keypad or touchscreen for personal identification number (PIN) input and navigation, and a dispenser for media (e.g., bank notes). Other components can include a receipt printer, deposit slot, or a display screen for user interaction. The software within an ATM is usually embedded with encryption protocols and operates on secure communication networks to ensure data privacy and protection. ATMs are connected to networks (e.g., banking networks or central servers), enabling real-time account verification and transaction processing. ATMs operate using a combination of standardized protocols, such as ISO 8583, for transaction messaging and robust operating systems, often customized for security and reliability. ATMs enable customers to perform various banking tasks such as cash withdrawal, deposits, fund transfers, balance inquiries, or bill payments.

A cryptocurrency wallet is a tool that enables users to securely store, manage, or interact with cryptocurrencies like Bitcoin, Ethereum, and others on blockchain networks. Unlike traditional wallets that hold physical currency, a cryptocurrency wallet doesn't store the currency itself but safeguards the cryptographic keys-both public and private keys-that grant access to a blockchain address and enable the sending and receiving of digital assets. Typically, the private key is a secret alphanumeric code that is kept confidential (e.g., a secret), because the private key is used to authorize access to digital assets or to sign transactions, proving ownership of the associated blockchain address. The public key, derived from the private key through cryptographic algorithms, generates wallet addresses that can be shared publicly to hold digital assets.

### SUMMARY

According to a first aspect of the present invention there is provided an automated teller machine (ATM) with a cold-wallet interface, the ATM comprising:
a user interface,
a memory including instructions; and
processing circuitry that, when in operation, is configured by the instructions to:
   receive, via the user interface, an instruction from a user for a cryptocurrency transaction, the cryptocurrency transaction including a transfer involving a cold wallet of the user;
   obtain a key from the cold wallet via a hardware interface of the ATM;
   perform the cryptocurrency transaction using the key; and
   erase the key from the ATM based on completion of a session between the user and the ATM.

Aptly, to perform the cryptocurrency transaction using the key, the processing circuitry is configured to interface with a remote exchange service to implement the transfer.

Aptly, the cold wallet is implemented visually on a material.

Aptly, the material is paper, cloth, glass, metal, wood, or ceramic.

Aptly, the hardware interface is an optical scanner.

Aptly, the cold wallet is implemented in electronic hardware.

Aptly, the hardware interface includes an electrical contact to the electronic hardware.

According to a second aspect of the present invention there is provided a machine readable media including instructions for a cold-wallet interface for an automated teller machine (ATM), the instructions, when executed by processing circuitry od the ATM, cause the processing circuitry to perform operations comprising:
receiving, via a user interface of the ATM, an instruction from a user for a cryptocurrency transaction, the cryptocurrency transaction including a transfer involving a cold wallet of the user;
obtaining a key from the cold wallet via a hardware interface of the ATM;
performing, by processing circuitry of the ATM, the cryptocurrency transaction using the key; and
erasing the key from the ATM based on completion of a session between the user and the ATM.

Aptly, wherein performing the cryptocurrency transaction using the key includes interfacing with a remote exchange service to implement the transfer.

Aptly, wherein the cold wallet is implemented visually on a material.

Aptly, wherein the material is paper, cloth, glass, metal, wood, or ceramic.

Aptly, wherein the hardware interface is an optical scanner.

Aptly, wherein the cold wallet is implemented in electronic hardware.

Aptly, wherein the hardware interface includes an electrical contact to the electronic hardware.

Aptly, wherein the hardware interface conforms to a Universal Serial Bus family of standards.

Aptly, wherein the hardware interface includes a radio transceiver configured to communicate with the electronic hardware when in operation.

Aptly, wherein the radio transceiver conforms to a Bluetooth family of standards, the radio transceiver conforms to a Near-Field Communication (NFC) family of standards, the radio transceiver conforms to a Radio Frequency Identification (RFID) family of standards.

Aptly, wherein the session between the user and the ATM is completed when the cryptocurrency transaction is completed.

Aptly, wherein the session between the user and the ATM is completed when the user is logged off of the ATM.

Aptly, wherein the operations comprise:
receiving, via the user interface of the ATM, a second instruction from a second user for a second cryptocurrency transaction, the second cryptocurrency transaction including a transfer to a second cold wallet that does not exist;
creating, by the processing circuitry of the ATM, a second key for the second cold wallet; and
writing the second key to media to create the second cold wallet.

### BRIEF DESCRIPTION OF THE DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a block diagram of an example of an environment including a system for cold-wallet interface for an automated teller machine, according to an embodiment.
FIG. 2 illustrates a flow diagram of an example of a method for cold-wallet interface for an automated teller machine, according to an embodiment.
FIG. 3 is a block diagram illustrating an example of a machine upon which one or more embodiments may be implemented.

### DETAILED DESCRIPTION

Cryptocurrency wallets can be categorized into hot wallets and cold wallets. Hot wallets are connected to the internet, providing convenient and immediate access to funds through web-based platforms, desktop applications, or mobile apps. While they offer ease of use, they are more susceptible to online threats such as hacking, malware, and phishing attacks due to their constant internet connectivity. In contrast, a cold wallet is a cryptocurrency wallet that remains offline, significantly enhancing security by isolating the private keys from internet exposure. By keeping the private keys offline, cold wallets protect against unauthorized access, cyberattacks, and other vulnerabilities inherent to internet-connected devices.

Types of cold wallets include hardware wallets, paper wallets, or air-gapped computers. Hardware wallets are physical devices designed explicitly for securing private keys offline, often resembling Universal Serial Bus (USB) drives, and they use secure hardware elements to store keys. Users connect the hardware wallet to an internet-enabled device only when they need to authorize a transaction. Paper wallets are physical documents that contain copies of the public and private keys, often in the form of Quick Response (QR) codes; since they are entirely offline, they are immune to online hacking attempts but must be protected from physical damage or loss. Air-gapped computers are dedicated devices that have never been connected to the internet, used to generate and store private keys and sign transactions offline.

When a transaction is initiated using a cold wallet, the process typically involves creating an unsigned transaction on an online device with the recipient's address and the amount to be sent. The unsigned transaction is then transferred to the cold wallet-often via USB, QR code, or memory card-where it is signed using the private key stored offline. The signed transaction is subsequently transferred back to the online device to be broadcasted to the blockchain network. This technique ensures that the private key never comes into contact with an internet-connected device, thereby maintaining a high level of security.

Cold wallets offer enhanced security by keeping private keys offline, providing robust protection against online threats like hacking and malware, and enabling users full control over their private keys and cryptocurrency holdings. However, cold wallets are less convenient for frequent transactions due to the additional steps involved to access or to authorize funds, and cold wallets can carry physical risks as hardware and paper wallets can be lost, stolen, or damaged, necessitating secure storage and backups.

Transferring funds to and from cold storage is often a cumbersome process requiring a computer, specialized software, or dedicated hardware wallets, which can be intimidating for average users. In cases where urgent access to funds is needed (e.g., travel emergencies, lost wallet recovery, etc.), retrieving assets from cold storage can be time-consuming and complicated, especially if hardware wallets or backup codes are not easily accessible. For many, cryptocurrencies remain difficult to integrate with traditional financial services due to regulatory barriers and limited infrastructure for cash conversions.

To enjoy the security benefits of cold wallets and address the issues of complexity or inconvenience currently present in using cold wallets, an ATM with a cold wallet interface can be used. Here, the ATM enables users to move crypto assets securely between offline storage and liquid cash or hot wallets. Thus, the cold-wallet interface increases the practical utility of digital assets and can facilitate easier entry and exit points for crypto holders. The ATM can be configured to support a variety of connections-such as hardware wallets via serial or wireless connections-or static media (e.g., paper) printed encrypted QR codes for safe transfers. In an example, the Atm is configured to perform immediate or delayed transactions to enhance security. Cold storage integration in ATMs can facilitate more advanced crypto management tools for everyday users, making it easier to store, access, or secure digital assets. As cryptocurrencies continue to gain mainstream adoption, these services could evolve to include advanced financial products like crypto-secured loans, staking rewards management, or automated investment strategies, all accessible via a cold wallet interface for an ATM. Additional details and examples are provided below.

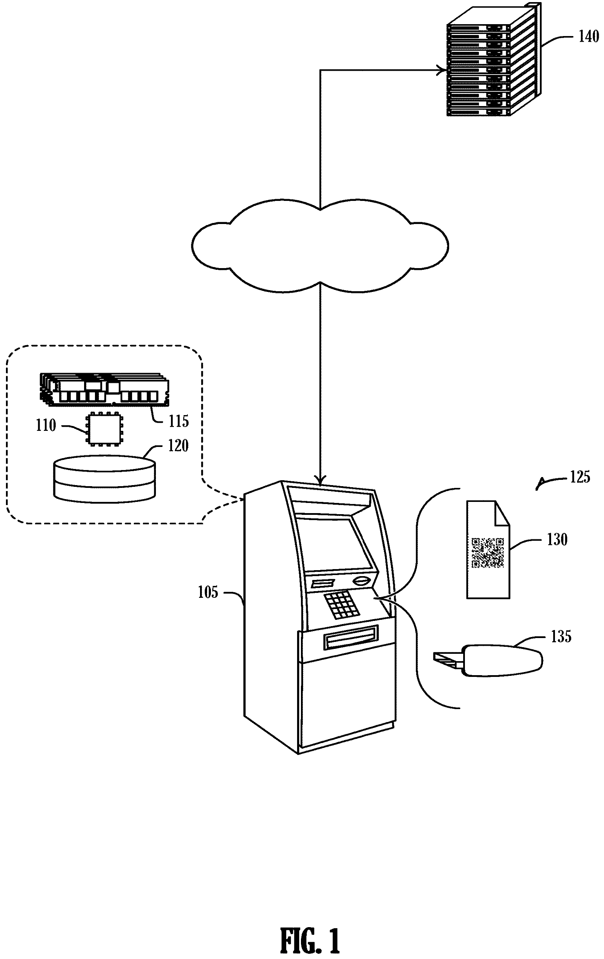

FIG. 1 is a block diagram of an example of an environment including a system 105 for cold-wallet interface for an automated teller machine, according to an embodiment. The system 105 includes processing circuitry 110, storage 120 (e.g., power-stable storage such as a hard drive, solid state drive, etc.), and memory 115. The memory 115 is generally used to maintain running state information for the system 105 that is usually discarded between system power cycles or restarts. The memory 115 and the storage 120 are both forms of computer readable media. The processing circuitry 110-or software residing in the memory 115 or storage 120 executing on the processing circuitry 110-configure the system 105 to perform various operations when in running.

As illustrated, the system 105 (e.g., an ATM) is connected (e.g., via network) to a remote exchange service 140. The connection to the remote exchange service can include both physical and software requirements to, for example, ensure a secure data connection. The remote exchange service 140 can be a crypto-exchange, a bank, or other entity that is capable of interacting with a distributed ledger (e.g., a blockchain) that supports a digital wallet. Generally, as noted above, a transaction with the distributed ledger involves the identification of a crypto asset via a public key and the signing, or confirmation, of a transaction by a private key held in the digital wallet.

The processing circuitry 110 is configured to receive an instruction is (e.g., via a user interface of the system 105) from a user. Here, the instruction is for (e.g., part of) a cryptocurrency transaction that includes a transfer involving a cold wallet 125 of the user. The receipt of the instruction can be implemented via a keypad, touchscreen, or even a wireless interface of the system 105 configured to interact with the user. Transactions can include the transfer of a digital assert (e.g., a cryptocurrency) from one digital wallet to another, executing a smart contract, or other distributed ledger supported activities (e.g., voting in a Decentralized Autonomous Organization (DAO)).

In an example, the cold wallet 125 is implemented in electronic hardware. As suggested above, a hardware cold wallet is a dedicated physical device, such as a USB device 135, configured to securely store cryptocurrency private keys offline. In an example, the electronic hardware is configured to generate and store private keys, ensuring that the keys are not exposed to external systems, even during transactions. In an example, the electronic hardware includes a connection interface (e.g., hardware or software) that conforms to a wired or a wireless standard. Examples of these standards can include USB, Bluetooth, or Near Field Communication (NFC). In an example, the electronic hardware includes secure elements (SEs) or other tamper-resistant chips to protect cryptographic operations. In an example, the electronic hardware is configured sign transactions directly, ensuring private keys remain isolated throughout the process. In an example, the electronic hardware supports crypto standards like BIP39 for mnemonic seed phrases or BIP44 for hierarchical deterministic wallets, enabling users to recover assets if the electronic hardware is lost or damaged. In an example, the electronic hardware can include PIN or biometric authentication for added security.

In an example, the cold wallet 125 is implemented visually on a material. In an example, the material is paper. The paper wallet 130 is illustrated with keys encoded using a matrix (e.g., two-dimensional bar) code. In an example, the material is cloth. In an example, the material is glass. In an example, the material is metal. In an example, the material is wood. In an example, the material is ceramic. The encoding of a scannable code, such as a QR code, can be achieved through printing, etching, or other processes that enable the code to be scanned from the surface of the material.

The processing circuitry 110 is configured to obtain (e.g., retrieved, received, etc.) a key from the cold wallet 125 via a hardware interface of the ATM. In an example, the hardware interface is an optical scanner. In the case of the optical scanner, the cold wallet 125 is presented to the scanner so that the key can be read from the QR, or other, code. In an example, the scanner can include a camera, an illuminator, or other elements that facilitate the reading of the key from the cold wallet. In an example, the interface is a microphone to detect an audio-encoded version of the key from the cold wallet 125.

In an example, the hardware interface includes an electrical contact to the electronic hardware. In an example, the hardware interface conforms to a USB family of standards. Electrical contact interfaces can be considered a wired interface. In this case, the cold wallet 125 is implemented as electronic hardware, such as the illustrated USB device 135.

In an example, the hardware interface includes a radio transceiver configured to communicate with the electronic hardware when in operation. In an example, the radio transceiver conforms to a Bluetooth family of standards. In an example, the radio transceiver conforms to a Near-Field Communication (NFC) family of standards. In an example, the radio transceiver conforms to a Radio Frequency Identification (RFID) family of standards. In these examples, the cold wallet 125 is implemented as electronic hardware includes a transceiver (whether independently powered or signal powered as in RFID).

The processing circuitry 110 is configured to perform at least a part of the cryptocurrency transaction using the key. This can include signing the transaction. In this last example, the key is the private key. In an example, performing the cryptocurrency transaction including the key includes interfacing with the remote exchange service 140 to implement the transfer. Here, the public key can be the public key to, for example, locate the distributed ledger entries that corresponds to the digital wallet.

The processing circuitry 110 is configured to erase the key based on completion of a session between the user and the system 105. Because the system 105 is connected to another entity, erasing the key (e.g., a private key) ensures protection of the key and thus maintains the nature of the cold wallet 125. Accordingly, once the session is complete, the information read from the cold wallet 125 is securely (e.g., cryptographically) removed from the system 105.

In an example, the session between the user and the system 105 is completed when the cryptocurrency transaction is completed. Here, the session is started when the transaction is first initiated-for example, the user begins entering data to start the transaction such as selecting a crypto-transaction menu option-and ended when the transaction (e.g., a single transfer) is completed. In an example, the session between the user and the system is completed when the user is logged off of the system 105. This example maintains the session for the duration of the user interaction with the system 105. Thus, for example, the user need scan the paper wallet 130 once yet complete several transfers.

The cold wallet interface can include creating a cold wallet, for example, on demand. Here, the processing circuitry 110 is configured to receive an instruction from the user (or another user) for a transaction that includes a transfer to a second cold wallet that does not exist. This can include the user opting to, for example, accept a transfer and specifying the target as a new cold wallet. The processing circuitry 110 is configured to create a second key (e.g., a public-private key pair) for the new cold wallet. Such creation can conform to current standards implemented by a target distributed ledger or the remote exchange service 140. The processing circuitry 110 is configured to write the second key to media to create the new cold wallet. Here, writing can include printing a QR code, or other matrix code, using a receipt printer, or other printer, of the system 105. In an example, writing can include using a wireless or wired hardware interface to write to an existing cold wallet implemented with electronic hardware. In an example, the system 105 includes a reserve of electronic hardware upon which the second key is written. In this case, the electronic hardware with the second key stored thereon can be dispensed to the user.

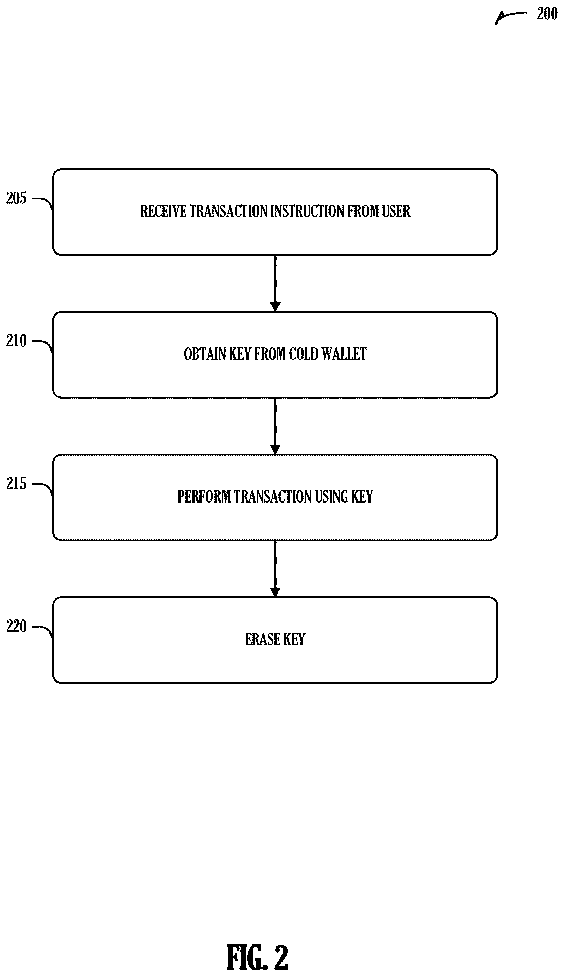

FIG. 2 illustrates a flow diagram of an example of a method 200 for cold-wallet interface for an ATM, according to an embodiment. The operations of the method 200 are performed by hardware, such as that described above or below (e.g., including processing circuitry).

At operation 205, an instruction is received (e.g., via a user interface of the ATM) from a user. Here, the instruction is for (e.g., part of) a cryptocurrency transaction that includes a transfer involving a cold wallet of the user. In an example, the cold wallet is implemented in electronic hardware.

In an example, the cold wallet is implemented visually on a material. In an example, the material is paper. In an example, the material is cloth. In an example, the material is glass. In an example, the material is metal. In an example, the material is wood. In an example, the material is ceramic.

At operation 210, a key is obtained (e.g., retrieved, received, etc.) from the cold wallet via a hardware interface of the ATM. In an example, the hardware interface is an optical scanner.

In an example, the hardware interface includes an electrical contact to the electronic hardware. In an example, the hardware interface conforms to a Universal Serial Bus family of standards.

In an example, the hardware interface includes a radio transceiver configured to communicate with the electronic hardware when in operation. In an example, the radio transceiver conforms to a Bluetooth family of standards. In an example, the radio transceiver conforms to a Near-Field Communication (NFC) family of standards. In an example, the radio transceiver conforms to a Radio Frequency Identification (RFID) family of standards.

At operation 215, the ATM (e.g., processing circuitry of the ATM) performs at least a part of the cryptocurrency transaction using the key. In an example, performing the cryptocurrency transaction including the key includes interfacing with a remote exchange service to implement the transfer.

At operation 220, the key is erased from the ATM based on completion of a session between the user and the ATM. In an example, the session between the user and the ATM is completed when the cryptocurrency transaction is completed. In an example, the session between the user and the ATM is completed when the user is logged off of the ATM.

In an example, the operations of the method 200 can include receiving a second instruction from a second user for a second cryptocurrency transaction. This second cryptocurrency transaction includes a transfer to a second cold wallet that does not exist. The operations can include the ATM (e.g., processing circuitry of the ATM) creating a second key for the second cold wallet and writing the second key to media to create the second cold wallet.

The system and technique described herein addresses the difficulty or using cold wallets in crypto-transaction by enabling secure and seamless cryptocurrency transfers, storage, or access through an ATM. Users can transfer cryptocurrency from an online hot wallet to a cold storage wallet directly via the ATM. The system generates secure, offline private keys, such as QR codes or USB-compatible wallet files, which can be stored on hardware devices or paper wallets. This approach is ideal for individuals looking to move their crypto holdings offline for long-term storage, reducing exposure to online threats while retaining the ability to access their assets later.

In addition to transfers, withdrawals from cold storage are facilitated. Users can connect their hardware wallets or import cold storage wallets using QR codes or USB devices to withdraw funds into a hot wallet or convert cryptocurrency directly into fiat currency. This functionality is integrated with existing crypto-network services, providing a streamlined and reliable process. It is particularly valuable for those who maintain offline assets but occasionally require liquidity or need to move funds based on market trends.

In an example, the system supports hardware wallets with connectivity options such as USB, Bluetooth, and NFC. This enables users to transfer funds securely between the ATM and their hardware wallets without compromising the offline integrity of their assets. This integration bridges the gap between the security of cold storage and the convenience of everyday transactions, offering users a practical and efficient solution.

In an example, the system includes compatibility with common cryptocurrency wallet standards, such as BIP39 and BIP44, to ensure broad support for different wallet types. The ATM can be configured to generate new cold storage wallets, printing them as paper wallets to keep private keys entirely offline and secure. These features provide significant value by enhancing the security of digital assets, offering an easy and reliable method to transfer funds to and from cold storage without relying on online platforms. Further, the system increases accessibility for non-technical users by simplifying the process of managing cold storage, making it more approachable. Additionally, the system serves as a convenient bridge between cold storage and liquid cash, streamlining what traditionally involves multiple steps. Thus, users are provided with a reliable and adaptable alternative for managing cryptocurrency holdings.

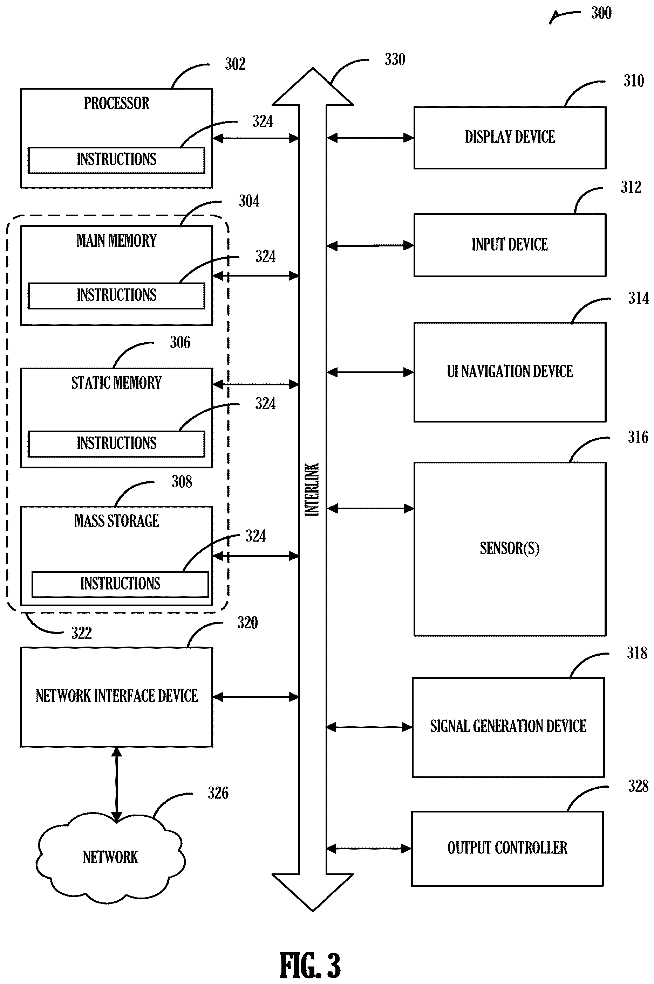

FIG. 3 illustrates a block diagram of an example machine 300 upon which any one or more of the techniques (e.g., methodologies) discussed herein may perform. Examples, as described herein, may include, or may operate by, logic or a number of components, or mechanisms in the machine 300. Circuitry (e.g., processing circuitry) is a collection of circuits implemented in tangible entities of the machine 300 that include hardware (e.g., simple circuits, gates, logic, etc.). Circuitry membership may be flexible over time. Circuitries include members that may, alone or in combination, perform specified operations when operating. In an example, hardware of the circuitry may be immutably designed to carry out a specific operation (e.g., hardwired). In an example, the hardware of the circuitry may include variably connected physical components (e.g., execution units, transistors, simple circuits, etc.) including a machine readable medium physically modified (e.g., magnetically, electrically, moveable placement of invariant massed particles, etc.) to encode instructions of the specific operation. In connecting the physical components, the underlying electrical properties of a hardware constituent are changed, for example, from an insulator to a conductor or vice versa. The instructions enable embedded hardware (e.g., the execution units or a loading mechanism) to create members of the circuitry in hardware via the variable connections to carry out portions of the specific operation when in operation. Accordingly, in an example, the machine readable medium elements are part of the circuitry or are communicatively coupled to the other components of the circuitry when the device is operating. In an example, any of the physical components may be used in more than one member of more than one circuitry. For example, under operation, execution units may be used in a first circuit of a first circuitry at one point in time and reused by a second circuit in the first circuitry, or by a third circuit in a second circuitry at a different time. Additional examples of these components with respect to the machine 300 follow.

In alternative embodiments, the machine 300 may operate as a standalone device or may be connected (e.g., networked) to other machines. In a networked deployment, the machine 300 may operate in the capacity of a server machine, a client machine, or both in server-client network environments. In an example, the machine 300 may act as a peer machine in peer-to-peer (P2P) (or other distributed) network environment. The machine 300 may be a personal computer (PC), a tablet PC, a set-top box (STB), a personal digital assistant (PDA), a mobile telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), other computer cluster configurations.

The machine (e.g., computer system) 300 may include a hardware processor 302 (e.g., a central processing unit (CPU), a graphics processing unit (GPU), a hardware processor core, or any combination thereof), a main memory 304, a static memory (e.g., memory or storage for firmware, microcode, a basic-input-output (BIOS), unified extensible firmware interface (UEFI), etc.) 306, and mass storage 308 (e.g., hard drives, tape drives, flash storage, or other block devices) some or all of which may communicate with each other via an interlink (e.g., bus) 330. The machine 300 may further include a display unit 310, an alphanumeric input device 312 (e.g., a keyboard), and a user interface (UI) navigation device 314 (e.g., a mouse). In an example, the display unit 310, input device 312 and UI navigation device 314 may be a touch screen display. The machine 300 may additionally include a storage device (e.g., drive unit) 308, a signal generation device 318 (e.g., a speaker), a network interface device 320, and one or more sensors 316, such as a global positioning system (GPS) sensor, compass, accelerometer, or other sensor. The machine 300 may include an output controller 328, such as a serial (e.g., universal serial bus (USB), parallel, or other wired or wireless (e.g., infrared (IR), near field communication (NFC), etc.) connection to communicate or control one or more peripheral devices (e.g., a printer, card reader, etc.).

Registers of the processor 302, the main memory 304, the static memory 306, or the mass storage 308 may be, or include, a machine readable medium 322 on which is stored one or more sets of data structures or instructions 324 (e.g., software) embodying or utilized by any one or more of the techniques or functions described herein. The instructions 324 may also reside, completely or at least partially, within any of registers of the processor 302, the main memory 304, the static memory 306, or the mass storage 308 during execution thereof by the machine 300. In an example, one or any combination of the hardware processor 302, the main memory 304, the static memory 306, or the mass storage 308 may constitute the machine readable media 322. While the machine readable medium 322 is illustrated as a single medium, the term "machine readable medium" may include a single medium or multiple media (e.g., a centralized or distributed database, and/or associated caches and servers) configured to store the one or more instructions 324.

The term "machine readable medium" may include any medium that is capable of storing, encoding, or carrying instructions for execution by the machine 300 and that cause the machine 300 to perform any one or more of the techniques of the present disclosure, or that is capable of storing, encoding or carrying data structures used by or associated with such instructions. Non-limiting machine readable medium examples may include solid-state memories, optical media, magnetic media, and signals (e.g., radio frequency signals, other photon based signals, sound signals, etc.). In an example, a non-transitory machine readable medium comprises a machine readable medium with a plurality of particles having invariant (e.g., rest) mass, and thus are compositions of matter. Accordingly, non-transitory machine-readable media are machine readable media that do not include transitory propagating signals. Specific examples of non-transitory machine readable media may include non-volatile memory, such as semiconductor memory devices (e.g., Electrically Programmable Read-Only Memory (EPROM), Electrically Erasable Programmable Read-Only Memory (EEPROM)) and flash memory devices; magnetic disks, such as internal hard disks and removable disks; magneto-optical disks; and CD-ROM and DVD-ROM disks.

In an example, information stored or otherwise provided on the machine readable medium 322 may be representative of the instructions 324, such as instructions 324 themselves or a format from which the instructions 324 may be derived. This format from which the instructions 324 may be derived may include source code, encoded instructions (e.g., in compressed or encrypted form), packaged instructions (e.g., split into multiple packages), or the like. The information representative of the instructions 324 in the machine readable medium 322 may be processed by processing circuitry into the instructions to implement any of the operations discussed herein. For example, deriving the instructions 324 from the information (e.g., processing by the processing circuitry) may include: compiling (e.g., from source code, object code, etc.), interpreting, loading, organizing (e.g., dynamically or statically linking), encoding, decoding, encrypting, unencrypting, packaging, unpackaging, or otherwise manipulating the information into the instructions 324.

In an example, the derivation of the instructions 324 may include assembly, compilation, or interpretation of the information (e.g., by the processing circuitry) to create the instructions 324 from some intermediate or preprocessed format provided by the machine readable medium 322. The information, when provided in multiple parts, may be combined, unpacked, and modified to create the instructions 324. For example, the information may be in multiple compressed source code packages (or object code, or binary executable code, etc.) on one or several remote servers. The source code packages may be encrypted when in transit over a network and decrypted, uncompressed, assembled (e.g., linked) if necessary, and compiled or interpreted (e.g., into a library, stand-alone executable etc.) at a local machine, and executed by the local machine.

The instructions 324 may be further transmitted or received over a communications network 326 using a transmission medium via the network interface device 320 utilizing any one of a number of transfer protocols (e.g., frame relay, internet protocol (IP), transmission control protocol (TCP), user datagram protocol (UDP), hypertext transfer protocol (HTTP), etc.). Example communication networks may include a local area network (LAN), a wide area network (WAN), a packet data network (e.g., the Internet), LoRa/LoRaWAN, or satellite communication networks, mobile telephone networks (e.g., cellular networks such as those complying with 3G, 4G LTE/LTE-A, or 5G standards), Plain Old Telephone (POTS) networks, and wireless data networks (e.g., Institute of Electrical and Electronics Engineers (IEEE) 802.11 family of standards known as Wi-Fi^{®}, IEEE 802.15.4 family of standards, peer-to-peer (P2P) networks, among others. In an example, the network interface device 320 may include one or more physical jacks (e.g., Ethernet, coaxial, or phone jacks) or one or more antennas to connect to the communications network 326. In an example, the network interface device 320 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding or carrying instructions for execution by the machine 300, and includes digital or analog communications signals or other intangible medium to facilitate communication of such software. A transmission medium is a machine readable medium.

### Additional Notes & Examples

Example 11 is an automated teller machine (ATM) with a cold-wallet interface, the ATM comprising: a user interface, a memory including instructions; and processing circuitry that, when in operation, is configured by the instructions to: receive, via the user interface, an instruction from a user for a cryptocurrency transaction, the cryptocurrency transaction including a transfer involving a cold wallet of the user; obtain a key from the cold wallet via a hardware interface of the ATM; perform the cryptocurrency transaction using the key; and erase the key from the ATM based on completion of a session between the user and the ATM.

In Example 12, the subject matter of Example 11, wherein to perform the cryptocurrency transaction using the key, the processing circuitry is configured to interface with a remote exchange service to implement the transfer.

In Example 13, the subject matter of any of Examples 11-12, wherein the cold wallet is implemented visually on a material.

In Example 14, the subject matter of Example 13, wherein the material is paper, cloth, glass, metal, wood, or ceramic.

In Example 15, the subject matter of any of Examples 13-14, wherein the hardware interface is an optical scanner.

In Example 16, the subject matter of any of Examples 11-15, wherein the cold wallet is implemented in electronic hardware.

In Example 17, the subject matter of Example 16, wherein the hardware interface includes an electrical contact to the electronic hardware.

In Example 18, the subject matter of Example 17, wherein the hardware interface conforms to a Universal Serial Bus family of standards.

In Example 19, the subject matter of any of Examples 16-18, wherein the hardware interface includes a radio transceiver configured to communicate with the electronic hardware when in operation.

In Example 20, the subject matter of Example 19, wherein the radio transceiver conforms to a Bluetooth family of standards, the radio transceiver conforms to a Near-Field Communication (NFC) family of standards, the radio transceiver conforms to a Radio Frequency Identification (RFID) family of standards.

In Example 21, the subject matter of any of Examples 11-20, wherein the session between the user and the ATM is completed when the cryptocurrency transaction is completed.

In Example 22, the subject matter of any of Examples 11-21, wherein the session between the user and the ATM is completed when the user is logged off of the ATM.

In Example 23, the subject matter of any of Examples 11-22, wherein the processing circuitry is configured to: receive, via the user interface, a second instruction from a second user for a second cryptocurrency transaction, the second cryptocurrency transaction including a transfer to a second cold wallet that does not exist; create a second key for the second cold wallet; and write the second key to media to create the second cold wallet.

Example 24 is a method for a cold-wallet interface for an automated teller machine (ATM), the method comprising: receiving, via a user interface of an ATM, an instruction from a user for a cryptocurrency transaction, the cryptocurrency transaction including a transfer involving a cold wallet of the user; obtaining a key from the cold wallet via a hardware interface of the ATM; performing, by processing circuitry of the ATM, the cryptocurrency transaction using the key; and erasing the key from the ATM based on completion of a session between the user and the ATM.

In Example 25, the subject matter of Example 24, wherein performing the cryptocurrency transaction using the key includes interfacing with a remote exchange service to implement the transfer.

In Example 26, the subject matter of any of Examples 24-25, wherein the cold wallet is implemented visually on a material.

In Example 27, the subject matter of Example 26, wherein the material is paper, cloth, glass, metal, wood, or ceramic.

In Example 28, the subject matter of any of Examples 26-27, wherein the hardware interface is an optical scanner.

In Example 29, the subject matter of any of Examples 24-28, wherein the cold wallet is implemented in electronic hardware.

In Example 30, the subject matter of Example 29, wherein the hardware interface includes an electrical contact to the electronic hardware.

In Example 31, the subject matter of Example 30, wherein the hardware interface conforms to a Universal Serial Bus family of standards.

In Example 32, the subject matter of any of Examples 29-31, wherein the hardware interface includes a radio transceiver configured to communicate with the electronic hardware when in operation.

In Example 33, the subject matter of Example 32, wherein the radio transceiver conforms to a Bluetooth family of standards, the radio transceiver conforms to a Near-Field Communication (NFC) family of standards, the radio transceiver conforms to a Radio Frequency Identification (RFID) family of standards.

In Example 34, the subject matter of any of Examples 24-33, wherein the session between the user and the ATM is completed when the cryptocurrency transaction is completed.

In Example 35, the subject matter of any of Examples 24-34, wherein the session between the user and the ATM is completed when the user is logged off of the ATM.

In Example 36, the subject matter of any of Examples 24-35, comprising: receiving, via the user interface of the ATM, a second instruction from a second user for a second cryptocurrency transaction, the second cryptocurrency transaction including a transfer to a second cold wallet that does not exist; creating, by the processing circuitry of the ATM, a second key for the second cold wallet; and writing the second key to media to create the second cold wallet.

Example 37 is a machine readable media including instructions for a cold-wallet interface for an automated teller machine (ATM), the instructions, when executed by processing circuitry od the ATM, cause the processing circuitry to perform operations comprising: receiving, via a user interface of the ATM, an instruction from a user for a cryptocurrency transaction, the cryptocurrency transaction including a transfer involving a cold wallet of the user; obtaining a key from the cold wallet via a hardware interface of the ATM; performing, by processing circuitry of the ATM, the cryptocurrency transaction using the key; and erasing the key from the ATM based on completion of a session between the user and the ATM.

In Example 38, the subject matter of Example 37, wherein performing the cryptocurrency transaction using the key includes interfacing with a remote exchange service to implement the transfer.

In Example 39, the subject matter of any of Examples 37-38, wherein the cold wallet is implemented visually on a material.

In Example 40, the subject matter of Example 39, wherein the material is paper, cloth, glass, metal, wood, or ceramic.

In Example 41, the subject matter of any of Examples 39-40, wherein the hardware interface is an optical scanner.

In Example 42, the subject matter of any of Examples 37-41, wherein the cold wallet is implemented in electronic hardware.

In Example 43, the subject matter of Example 42, wherein the hardware interface includes an electrical contact to the electronic hardware.

In Example 44, the subject matter of Example 43, wherein the hardware interface conforms to a Universal Serial Bus family of standards.

In Example 45, the subject matter of any of Examples 42-44, wherein the hardware interface includes a radio transceiver configured to communicate with the electronic hardware when in operation.

In Example 46, the subject matter of Example 45, wherein the radio transceiver conforms to a Bluetooth family of standards, the radio transceiver conforms to a Near-Field Communication (NFC) family of standards, the radio transceiver conforms to a Radio Frequency Identification (RFID) family of standards.

In Example 47, the subject matter of any of Examples 37-46, wherein the session between the user and the ATM is completed when the cryptocurrency transaction is completed.

In Example 48, the subject matter of any of Examples 37-47, wherein the session between the user and the ATM is completed when the user is logged off of the ATM.

In Example 49, the subject matter of any of Examples 37-48, wherein the operations comprise: receiving, via the user interface of the ATM, a second instruction from a second user for a second cryptocurrency transaction, the second cryptocurrency transaction including a transfer to a second cold wallet that does not exist; creating, by the processing circuitry of the ATM, a second key for the second cold wallet; and writing the second key to media to create the second cold wallet.

Example 50 is a system for a cold-wallet interface for an automated teller machine (ATM), the system comprising: means for receiving, via a user interface of an ATM, an instruction from a user for a cryptocurrency transaction, the cryptocurrency transaction including a transfer involving a cold wallet of the user; means for obtaining a key from the cold wallet via a hardware interface of the ATM; means for performing, by processing circuitry of the ATM, the cryptocurrency transaction using the key; and e means for rasing the key from the ATM based on completion of a session between the user and the ATM.

In Example 51, the subject matter of Example 50, wherein the means for performing the cryptocurrency transaction using the key include means for interfacing with a remote exchange service to implement the transfer.

In Example 52, the subject matter of any of Examples 50-51, wherein the cold wallet is implemented visually on a material.

In Example 53, the subject matter of Example 52, wherein the material is paper, cloth, glass, metal, wood, or ceramic.

In Example 54, the subject matter of any of Examples 52-53, wherein the hardware interface is an optical scanner.

In Example 55, the subject matter of any of Examples 50-54, wherein the cold wallet is implemented in electronic hardware.

In Example 56, the subject matter of Example 55, wherein the hardware interface includes an electrical contact to the electronic hardware.

In Example 57, the subject matter of Example 56, wherein the hardware interface conforms to a Universal Serial Bus family of standards.

In Example 58, the subject matter of any of Examples 55-57, wherein the hardware interface includes a radio transceiver configured to communicate with the electronic hardware when in operation.

In Example 59, the subject matter of Example 58, wherein the radio transceiver conforms to a Bluetooth family of standards, the radio transceiver conforms to a Near-Field Communication (NFC) family of standards, the radio transceiver conforms to a Radio Frequency Identification (RFID) family of standards.

In Example 60, the subject matter of any of Examples 50-59, wherein the session between the user and the ATM is completed when the cryptocurrency transaction is completed.

In Example 61, the subject matter of any of Examples 50-60, wherein the session between the user and the ATM is completed when the user is logged off of the ATM.

In Example 62, the subject matter of any of Examples 50-61, comprising: means for receiving, via the user interface of the ATM, a second instruction from a second user for a second cryptocurrency transaction, the second cryptocurrency transaction including a transfer to a second cold wallet that does not exist; means for creating, by the processing circuitry of the ATM, a second key for the second cold wallet; and means for writing the second key to media to create the second cold wallet.

Example 63 is at least one machine-readable medium including instructions that, when executed by processing circuitry, cause the processing circuitry to perform operations to implement of any of Examples 11-62.

Example 64 is an apparatus comprising means to implement of any of Examples 11-62.

Example 65 is a system to implement of any of Examples 11-62.

Example 66 is a method to implement of any of Examples 11-62.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, the present inventors also contemplate examples in which only those elements shown or described are provided. Moreover, the present inventors also contemplate examples using any combination or permutation of those elements shown or described (or one or more aspects thereof), either with respect to a particular example (or one or more aspects thereof), or with respect to other examples (or one or more aspects thereof) shown or described herein.

All publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In the appended claims, the terms "including" and "in which" are used as the plain-English equivalents of the respective terms "comprising" and "wherein." Also, in the following claims, the terms "including" and "comprising" are open-ended, that is, a system, device, article, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

The above description is intended to be illustrative, and not restrictive. For example, the above-described examples (or one or more aspects thereof) may be used in combination with each other. Other embodiments may be used, such as by one of ordinary skill in the art upon reviewing the above description. The Abstract is to allow the reader to quickly ascertain the nature of the technical disclosure and is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the embodiments should be determined with reference to the appended claims, along with the full scope of equivalents to which such claims are entitled.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. An automated teller machine (ATM) with a cold-wallet interface, the ATM comprising:
a user interface,
a memory including instructions; and
processing circuitry that, when in operation, is configured by the instructions to:
receive, via the user interface, an instruction from a user for a cryptocurrency transaction, the cryptocurrency transaction including a transfer involving a cold wallet of the user;
obtain a key from the cold wallet via a hardware interface of the ATM;
perform the cryptocurrency transaction using the key; and
erase the key from the ATM based on completion of a session between the user and the ATM.

2. The automated teller machine of claim 1, wherein to perform the cryptocurrency transaction using the key, the processing circuitry is configured to interface with a remote exchange service to implement the transfer.

3. The automated teller machine of claim 1 or claim 2, wherein the cold wallet is implemented visually on a material.

4. The automated teller machine of claim 3, wherein the material is paper, cloth, glass, metal, wood, or ceramic; and/or wherein the hardware interface is an optical scanner.

5. The automated teller machine of claim 1 or claim 2, wherein the cold wallet is implemented in electronic hardware; and optionally wherein the hardware interface includes an electrical contact to the electronic hardware.

6. A machine readable media including instructions for a cold-wallet interface for an automated teller machine (ATM), the instructions, when executed by processing circuitry of the ATM, cause the processing circuitry to perform operations comprising:
receiving, via a user interface of the ATM, an instruction from a user for a cryptocurrency transaction, the cryptocurrency transaction including a transfer involving a cold wallet of the user;
obtaining a key from the cold wallet via a hardware interface of the ATM;
performing, by processing circuitry of the ATM, the cryptocurrency transaction using the key; and
erasing the key from the ATM based on completion of a session between the user and the ATM.

7. The machine readable media of claim 6, wherein performing the cryptocurrency transaction using the key includes interfacing with a remote exchange service to implement the transfer.

8. The machine readable media of claim 6 or claim 7, wherein the cold wallet is implemented visually on a material.

9. The machine readable media of claim 8, wherein the material is paper, cloth, glass, metal, wood, or ceramic; and/or wherein the hardware interface is an optical scanner.

10. The machine readable media of claim 6 or claim 7, wherein the cold wallet is implemented in electronic hardware.

11. The machine readable media of claim 10, wherein the hardware interface includes an electrical contact to the electronic hardware; and optionally wherein the hardware interface conforms to a Universal Serial Bus family of standards.

12. The machine readable media of claim 10 or claim 11, wherein the hardware interface includes a radio transceiver configured to communicate with the electronic hardware when in operation; and optionally wherein the radio transceiver conforms to a Bluetooth family of standards, or the radio transceiver conforms to a Near-Field Communication (NFC) family of standards, or the radio transceiver conforms to a Radio Frequency Identification (RFID) family of standards.

13. The machine readable media of any one of claims 6 to 12, wherein the session between the user and the ATM is completed when the cryptocurrency transaction is completed.

14. The machine readable media of any one of claims 6 to 13, wherein the session between the user and the ATM is completed when the user is logged off of the ATM.

15. The machine readable media of any one of claim 6 to 14, wherein the operations comprise:
receiving, via the user interface of the ATM, a second instruction from a second user for a second cryptocurrency transaction, the second cryptocurrency transaction including a transfer to a second cold wallet that does not exist;
creating, by the processing circuitry of the ATM, a second key for the second cold wallet; and
writing the second key to media to create the second cold wallet.
